# EUROPÄISCHE PATENTSCHRIFT

(11) **EP 4 072 916 B1**
(45) Veröffentlichungstag und Bekanntmachung des Hinweises auf die Patenterteilung: **17.01.2024**
(21) Anmeldenummer: 20816973.0
(22) Anmeldetag: 30.11.2020
(51) Int. Cl.: B60T 13/68, B60T 13/66, B60T 8/88, B60T 8/32, B60T 7/04, B60T 17/22

(54) **BREMSANLAGE EINES NUTZFAHRZEUGS**
BRAKE SYSTEM OF A COMMERCIAL VEHICLE
SYSTÈME DE FREINAGE POUR UN VÉHICULE UTILITAIRE

(30) Priorität: 10.12.2019 DE 202019106881 U
(43) Veröffentlichungstag der Anmeldung: 19.10.2022
(73) Patentinhaber: Haldex Brake Products Aktiebolag, 261 24 Landskrona (SE)
(72) Erfinder: NILSSON, Kristoffer, 22731 Lund (SE); FYHR, Pontus, 22734 Lund (SE); LUNDBERG, Fredrik, 29891 Tollarp (SE)
(74) Vertreter: REHBERG HÜPPE + PARTNER
(86) Internationale Anmeldenummer: PCT/EP2020/083946
(87) Internationale Veröffentlichungsnummer: WO 2021/115827

(56) Entgegenhaltungen:
- WO-A1-2020/057964
- DE-A1- 10 320 608

## Beschreibung

### TECHNISCHES GEBIET DER ERFINDUNG

Die Erfindung betrifft eine pneumatische Bremsanlage eines Nutzfahrzeugs.

### STAND DER TECHNIK

Um während des Fahrbetriebs bei Ausfall einer pneumatischen Betriebsbremse eine redundante Bereitstellung einer Bremskraft zu ermöglichen, sind aus dem Stand der Technik Ausführungsformen bekannt, bei welchen die Parkbremse genutzt wird, um das Fahrzeug abzubremsen.

Gemäß US 8,820,856 B2 und EP 3 317 149 B1 wird vorgeschlagen, die Parkbremse einzusetzen, um eine Haltefunktion des Nutzfahrzeugs an einem Berg durch die Betriebsbremse zu unterstützen oder zu ersetzen. Gemäß den Druckschriften EP 2 090 481 B1, WO 2018/172233 A1, WO 2018/172268 A1 und EP 3 415 386 A1 werden elektrische oder pneumatische Signale eines Parkbremskreises verwendet zur Betätigung der Betriebsbremsen an Achsen, die mit oder ohne Parkbremsen ausgestattet sein können. Gemäß den Druckschriften EP 1 968 830 B1 und EP 3 145 769 B1 wird im Redundanzfall anstelle der Parkbremse die Betriebsbremse verwendet oder es erfolgt die Betätigung der Parkbremsen durch die Betriebsbremse für den Fall, dass ein Steuersystem für die Parkbremse versagt. EP 1 963 151 B1 und EP 3 368 387 B1 offenbaren weitere Lösungen für eine Gewährleistung einer Redundanz im Fall eines Versagens innerhalb eines Parkbremssystems. Weitere Druckschriften, die nicht gattungsgemäße Personen-Kraftfahrzeuge betreffen, sind insbesondere US 2014/015310 A1, WO 2014/173605 A1, WO 2018/219789 A1 und DE 10 2018 005 235 A1.

DE 103 20 608 A1 offenbart eine elektropneumatische Fahrzeugbremsanlage. Die beiden Bremszylinder an der Vorderachse werden jeweils über eine pneumatische Leitung von einem elektropneumatischen Druckregelmodul (EPM) mit Bremsdruck beaufschlagt. Beide Druckregelmodule der Vorderachse werden über einen gemeinsamen Druckluftspeicher mit Druckluft versorgt. Die Druckregelmodule weisen einen elektrischen Steuereingang auf, der mit einer Steuerelektronik verbunden ist, die die Bremssteuerung der Bremszylinder der Vorderachse steuert. Hingegen weisen die Hinterräder Federspeicherbremszylinder auf, die jeweils über eine pneumatische Bremsleitung mit einem zugeordneten Druckregelmodul verbunden sind. Die Druckluftversorgung der Druckregelmodule der Hinterachse erfolgt über einen zweiten Druckluftspeicher. Die Federspeicherbremszylinder sind des Weiteren über eine gemeinsame Druckluftleitung mit einem elektrisch ansteuerbaren Feststellbremsventil verbunden. Eine Ansteuerung der Druckregelmodule der Hinterachse erfolgt über eine zweite Steuerelektronik, die die Federspeicherbremszylinder der Hinterachse ansteuert. Das Feststellbremsventil ist mit beiden Steuerelektroniken verbunden. Von dem Feststellbremsventil führt über ein Rückschlagventil eine pneumatische Leitung zu einem dritten Druckluftspeicher. Die beiden Steuerelektroniken sind über elektrische Leitungen mit einem zugeordneten Bus VehCom1 bzw. VehCom2 verbunden. Über diese Busleitungen steht die Fahrzeugbremsanlage mit anderen elektrischen und elektronischen Fahrzeugsystemen in Verbindung. Über die Busleitungen wird auch ein Bremsanforderungssignal, welches von dem Fahrer über das Bremspedal vorgegeben wird, den Steuerelektroniken zugeführt. Die beiden Steuerelektroniken sind über eine Kommunikationsleitung miteinander verbunden, die eine galvanische Trennung aufweist. Für dieses Ausführungsbeispiel ist die Bremsanlage zweikreisig ausgebildet, wobei in einem Kreis die Versorgung und Steuerung der Vorderachse erfolgt und in dem anderen Kreis die Versorgung und Steuerung der Hinterachse erfolgt. DE 103 20 608 A1 offenbart auch eine Ausführungsform, bei welcher selbst bei einer Störung sämtliche Fahrzeugbremsen über einen Primär-Bremskreis betätigbar sind. Ein Sekundärkreis übernimmt die Bremssteuerung sämtlicher Räder des Fahrzeugs und auch eines ggf. vorhandenen Anhängerfahrzeugs, wenn der Primär-Bremskreis ausfällt. Für das Ausführungsbeispiel sind jedem Bremszylinder redundante elektropneumatische Druckregelmodule zugeordnet, die dann jeweils mit einer der beiden Steuerelektroniken verbunden sind.

WO2020/057964 A1 offenbart ein Bremssystem für ein Fahrzeug, umfassend: einen Druckmodulator der ersten Achse für Betriebsbremskammern; einen Druckmodulator der zweiten Achse für Federspeicherbremszylinder; eine elektronische Bremssteuereinheit, die ausgebildet ist, ein erstes elektrisches Steuersignal zum Steuern des Druckmodulators der ersten Achse und ein zweites elektrisches Steuersignal zum Steuern des Druckmodulators der zweiten Achse auszugeben; eine weitere elektronische Bremssteuereinheit, die ausgebildet ist, ein weiteres erstes elektrisches Steuersignal zum Steuern des Druckmodulators der ersten Achse und ein weiteres zweites elektrisches Steuersignal zum Steuern des Druckmodulators der zweiten Achse auszugeben; gekennzeichnet durch eine elektronische Parkbremssteuereinheit, die ausgebildet ist, ein zweites pneumatisches Steuersignal zum Steuern der Federspeicherbremszylinder auszugeben; und eine Druckmodulatoreinheit die ausgebildet ist, ein pneumatisches Signal oder ein elektrisches Signal, das von der elektronischen Parkbremssteuereinheit ausgegeben wird, in ein erstes pneumatisches Steuersignal zum Steuern des Druckmodulators der ersten Achse umzuwandeln.

### AUFGABE DER ERFINDUNG

Der Erfindung liegt die Aufgabe zugrunde, eine Bremsanlage eines Nutzfahrzeugs vorzuschlagen, welche hinsichtlich einer Redundanz bei dem Auftreten eines Fehlers verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

Die Erfindung schlägt eine pneumatische Bremsanlage für ein Nutzfahrzeug vor, bei welcher zwei Steuereinheiten, nämlich eine erste Steuereinheit und eine zweite Steuereinheit, vorhanden sind. Die erste Steuereinheit ist über ein Bussystem mit einer elektropneumatischen Radbremseinheit verbunden, die vorzugsweise radnah angeordnet ist, insbesondere mit einem Abstand von dem Fahrzeugrad, der kleiner als 1 m ist, kleiner als 80 cm oder kleiner ist als 50 cm. Vorzugsweise ist die Radbremseinheit an dem Fahrzeugrahmen unmittelbar benachbart dem Fahrzeugrad angeordnet oder an einem Fahrzeugradträger angeordnet, so dass die Radbremseinheit mit einer Einfederung des Fahrzeugrads mit dem Fahrzeugradträger einfedert und/oder auch eine etwaige Lenkbewegung des Fahrzeugrads ausführt.

An die elektropneumatische Radbremseinheit ist eine Betriebsbremskammer eines Kombi-Bremszylinders angeschlossen. Die Radbremseinheit wird elektrisch über das Bussystem angesteuert, was insbesondere bedeuten soll, dass über das Bussystem eine Bremsanforderung an die Radbremseinheit übertragen wird. Mittels der Radbremseinheit wird auf Grundlage der Bremsanforderung ein pneumatischer Bremsdruck ausgesteuert, der dann zu der Betriebsbremskammer des Kombi-Bremszylinders gelangt. Auf diese Weise kann eine übliche Betriebsbremsfunktion gewährleistet werden, bei der neben der Bremsanforderung auch weitere Kriterien für die Regelung des pneumatischen Bremsdrucks berücksichtigt sein können wie eine dynamische Fahrstabilisierung, eine Gewährleistung einer ABS-Funktion u. ä.

Auch die zweite Steuereinheit über ist das Bussystem mit der elektropneumatischen Radbremseinheit verbunden. Die zweite Steuereinheit steuert dabei elektrisch die Radbremseinheit über das Bussystem an. Auch hier erfolgt die Ansteuerung der Radbremseinheit derart, dass diese auf Grundlage einer Bremsanforderung einen pneumatischen Bremsdruck für die Betriebsbremskammer des Kombi-Bremszylinders aussteuern kann.

Somit ermöglichen die beiden genannten Steuereinheiten einen redundanten Betrieb, bei dem dieselbe Bremsanforderung von den beiden Steuereinheiten an die Radbremseinheit übertragen werden kann und/oder unterschiedliche Bremsanforderungen einerseits über die erste Steuereinheit und andererseits über die zweite Steuereinheit an die Radbremseinheit übertragen werden können.

Erfindungsgemäß dient die zweite Steuereinheit einem weiteren Zweck, indem diese auch eine elektropneumatische Parkbrems-Ventileinrichtung elektrisch ansteuert, wobei die Parkbrems-Ventileinrichtung baulich getrennt von der zweiten Steuereinheit ausgebildet sein kann oder vorzugsweise mit der zweiten Steuereinheit eine gemeinsame Baueinheit bildet. Die Ansteuerung der Parkbrems-Ventileinrichtung erfolgt dabei derart, dass entsprechend einer Bremsanforderung von der Parkbrems-Ventileinrichtung ein Parkbremsdruck erzeugt wird. Um eine Übertragung des Parkbremsdrucks an die Federspeicherkammer des Kombi-Bremszylinders zu ermöglichen, ist die Parkbrems-Ventileinrichtung über eine pneumatische Parkbremsleitung mit der Federspeicherkammer des Kombi-Bremszylinders verbunden ist.

Erfindungsgemäß erfolgt für eine erste Variante eine Vorgabe einer Bremsanforderung durch eine Betriebsbremseinheit. Die Betriebsbremseinheit dient vorzugsweise der Ansteuerung der Bremsaktuatoren in einem Normalbetrieb ohne auftretenden Fehler und hierbei insbesondere während des Fahrbetriebs. In diesem Fall kann die Betriebsbremseinheit über Bremsanforderungs-Signalleitungen sowohl mit der ersten Steuereinheit als auch mit der zweiten Steuereinheit verbunden sein, um die Fahrer-Bremsanforderung zu übertragen. Somit sind redundante Übertragungswege vorhanden, die dann ermöglichen, dass die Bremsanforderung entweder von der ersten Steuereinheit oder der zweiten Steuereinheit berücksichtigt wird, was dann entweder über die Bussysteme und die Radbremseinheiten erfolgen kann oder im Fall der zweiten Steuereinheit alternativ auch durch die Parkbrems-Ventileinrichtung, die Parkbremsleitung und die Federspeicherkammern erfolgen kann.

Für eine (alternative oder kumulative) weitere Variante der Erfindung wird von dem Fahrer eine Parkbremsanforderung erzeugt. Zu diesem Zweck ist die Parkbremsbetätigungseinheit, an der der Fahrer die Parkbremsanforderung vorgeben kann, über Parkbremsanforderungs-Signalleitungen sowohl mit der ersten Steuereinheit als auch mit der zweiten Steuereinheit verbunden, so dass auch eine redundante Übertragung der Parkbremsanforderung möglich ist. Auch hier kann dann die Umsetzung der Parkbremsanforderung einerseits durch die erste Steuereinheit und andererseits durch die zweite Steuereinheit erfolgen, was entweder über die Bussysteme unter Beaufschlagung der Radbremseinheiten erfolgen kann oder im Fall der zweiten Steuereinheit alternativ auch durch geeignete Beaufschlagung der Parkbrems-Ventileinrichtung und Übertragung eines Parkbremsdrucks über die Parkbremsleitung an die Federspeicherkammer des Kombi-Bremszylinders erfolgen kann.

Die Betriebsbremseinheit, die insbesondere als elektronische Steuereinheit ausgebildet ist, kann ein autonomes Fahrzeug-Steuersystem sein in den unterschiedlichen derzeit möglichen und geplanten Ausbaustufen und mit unterschiedlichem Ausmaß der Eingriffs-, Korrektur- oder Notfall-Möglichkeiten für den Fahrer.

Ebenfalls möglich ist, dass die Betriebsbremseinheit, die die Bremsanforderung erzeugt, eine Bremspedaleinheit ist. An der Bremspedaleinheit kann der Fahrer dann eine Bremsanforderung, die in diesem Fall eine Fahrer-Bremsanforderung ist, über ein Bremspedal vorgeben. Wenn im Folgenden bevorzugt auf die Ausgestaltung der Betriebsbremseinheit als Bremspedaleinheit eingegangen wird, gilt jeweils das Entsprechende für die Ausgestaltung der Betriebsbremseinheit als autonomes Fahrzeug-Steuersystem.

Für die zuvor erläuterten Ausführungsformen ist bereits an mehreren Stellen eine Redundanz vorhanden, welche auch
- bei Ausfall eines Signalgebers wie der Bremspedaleinheit oder der Parkbremsbetätigungseinheit,
- bei Ausfall einer Steuereinheit,
- bei Ausfall einer pneumatischen oder elektrischen Leitung oder eines Bussystems
dennoch einen Betrieb mit voller oder reduzierter Funktionalität gewährleistet werden kann. Eine weitere Erhöhung der Sicherheit oder eine zusätzliche Redundanz kann bereitgestellt werden, wenn die Parkbremsbetätigungseinheit und/oder die Bremspedaleinheit nicht lediglich mit einer einzigen "ersten Steuereinheit", welche für den normalen Fahrbetrieb eine Ansteuerung der Betriebsbremse gewährleistet und auch als Fahrzeugsteuereinrichtung oder "vehicle management module" oder VMM bezeichnet werden kann, verbunden ist. Vielmehr können zwei "erste Steuereinheiten" vorhanden sein, die dieselben Funktionen aufweisen können oder bei denen die Funktion einer Steuereinheit u. U. eingeschränkt ist. Vorzugsweise sind diese beiden ersten Steuereinheiten für die Beaufschlagung der Betriebsbremsen im "normalen Fahrbetrieb" zuständig. Fällt eine der beiden ersten Steuereinheiten aus, kann die andere Steuereinheit "übernehmen". Vorzugsweise sind die beiden ersten Steuereinheiten über ein Bussystem mit den Radbremseinheiten verbunden, um diese elektronisch anzusteuern für die Aussteuerung eines geeigneten Bremsdruckes an die Betriebsbremszylinder.

Möglich ist, dass die (mindestens eine) erste Steuereinheit und die zweite Steuereinheit ausschließlich über mindestens ein Bussystem miteinander verbunden sind. Für einen weiteren Vorschlag der Erfindung sind die erste Steuereinheit und die zweite Steuereinheit über eine Steuereinheiten-Verbindungsleitung miteinander verbunden. Bei dieser Steuereinheiten-Verbindungsleitung kann es sich um ein zusätzliches Bussystem handeln, welches ausschließlich zwischen den beiden Steuereinheiten wirkt oder auch weiteren Zwecken dienen kann. Möglich ist aber auch, dass die Steuereinheiten-Verbindungsleitung als herkömmliche elektrische Leitung und nicht als Busleitung ausgebildet ist, über die dann elektrische Signale zwischen den Steuereinheiten übertragen werden können. Mittels der Steuereinheiten-Verbindungsleitung kann auch eine Kommunikation zwischen der ersten Steuereinheit und der zweiten Steuereinheit erfolgen, wenn beispielsweise eine Ansteuerung der Radbremseinheiten durch die erste Steuereinheit über das Bussystem fehlerhaft ist. In diesem Fall kann eine Fahrer-Bremsanforderung oder ein Steuersignal von der ersten Steuereinheit über die Steuereinheiten-Verbindungsleitung an die zweite Steuereinheit übermittelt werden, wobei dann die zweite Steuereinheit auf dieser Grundlage entweder über das Bussystem die Radbremseinheiten ansteuern kann oder aber die Parkbrems-Ventileinrichtung ansteuern kann, um einen pneumatischen Druck auszusteuern, der dann über die Parkbremsleitung die Federspeicherbremsen zur Herbeiführung einer Bremskraft übertragen wird. Durchaus möglich ist aber auch, dass die zweite Steuereinheit eine Fahrer-Bremsanforderung, die entweder über die Bremspedaleinheit oder über die Parkbremsbetätigungseinheit vorgegeben ist, oder ein anderweitiges Steuersignal über die Steuereinheiten-Verbindungsleitung an die erste Steuereinheit überträgt, die dann über das Bussystem die Radbremseinheiten ansteuern kann, um einen geeigneten Bremsdruck für die Betriebsbremszylinder auszusteuern. Entsprechend ist auch möglich, dass über die Steuereinheiten-Verbindungsleitung eine Bremsanforderung eines autonomen Fahrzeug-Steuersystems von der ersten Steuereinheit an die zweite Steuereinheit (und/oder umgekehrt) übertragen werden kann.

Vorteilhafte Weiterbildungen der Erfindung ergeben sich aus den abhängigen Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts- nicht des Schutzbereichs - der ursprünglichen Anmeldungsunterlagen gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

Der Schutzbereich der Erfindung wird durch die beigefügten Ansprüche festgelegt.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig.** 1: zeigt schematisch eine in einer pneumatischen Bremsanlage einsetzbare Radbremseinheit.
- **Fig.** 2: zeigt schematisch eine pneumatische Bremsanlage eines Nutzfahrzeugs.
- **Fig.** 3: zeigt schematisch eine weitere pneumatische Bremsanlage eines Nutzfahrzeugs.
- **Fig.** 4: zeigt schematisch eine weitere pneumatische Bremsanlage eines Nutzfahrzeugs.

### FIGURENBESCHREIBUNG

In den Figuren werden Bauelemente und Baueinheiten, die hinsichtlich ihrer Gestaltung und/oder Funktion gleich oder ähnlich sind, teilweise mit denselben Bezugsnummern gekennzeichnet, wobei diese dann durch den ergänzenden Buchstaben a, b, ... voneinander unterschieden sein können. Auf diese Bauelemente wird dann mit den Bezugsnummern mit oder ohne den ergänzenden Buchstaben Bezug genommen, womit dann ein derartiges Bauelement, mehrere oder sämtliche derartige Bauelemente gemeint sein können. Des Weiteren sind Bauelemente oder Baueinheiten, die unterschiedlichen Achsen zugeordnet sind, mit dem Zusatz "-1", "-2", "-3" entsprechend der Nummerierung der Achsen gekennzeichnet, wobei auch auf diese Bauelemente oder Baueinheiten mit oder ohne Verwendung des Zusatzes Bezug genommen werden kann.

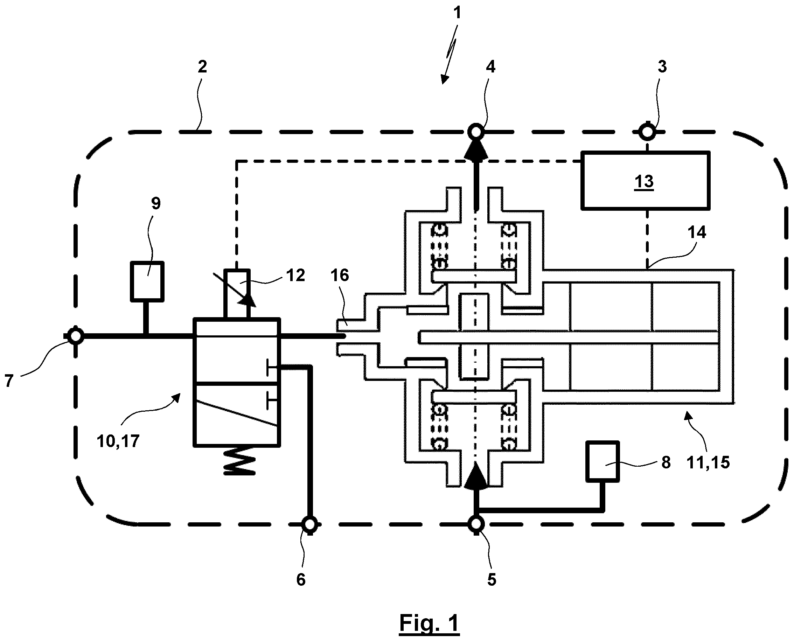

**Fig. 1** zeigt eine Radbremseinheit 1. Die Radbremseinheit 1 verfügt über ein Gehäuse 2. Die Radbremseinheit 1 weist einen elektrischen Steueranschluss 3 oder einen Anschluss an ein Bussystem auf. Des Weiteren weist die Radbremseinheit 1 einen Entlüftungsanschluss 4 sowie einen Versorgungsanschluss 5, einen Redundanzanschluss 6 und einen Bremsaktuator-Anschluss 7 auf. Ein optionaler Drucksensor 8 in der Radbremseinheit 1 erfasst den Druck an dem Versorgungsanschluss 5, während ein optionaler Drucksensor 9 den Druck an dem Bremsaktuator-Anschluss 7 erfassen kann.

In der Radbremseinheit 1 sind ein Redundanzventil 10 und ein Bremsdruckventil 11 angeordnet.

Das Redundanzventil 10 wird über einen Steueranschluss 12 von einer elektronischen Steuereinheit 13 angesteuert, während die elektronische Steuereinheit 13 das Bremsdruckventil 11 über einen Steueranschluss 14 ansteuert. Der Steuereinheit 13 wird über den Steueranschluss 3 beispielsweise ein Bremsanforderungssignal, welches von einem Fahrer über eine Bremspedaleinheit vorgegeben sein kann oder von einem autonomen Fahrzeug-Steuersystem kommt, zugeführt. Die Ansteuerung des Redundanzventils 10 sowie des Bremsdruckventils 11 erfolgt zur Umsetzung der Bremsanforderung in einen pneumatischen Bremsdruck an dem Bremsaktuator-Anschluss 7.

Das Bremsdruckventil 11 ist vorzugsweise als Schwenkankerventil 15 ausgebildet und nimmt ohne elektrische Bestromung die in Fig. 1 wirksame Sperrstellung auf, in welcher ein Ausgangsanschluss 16 sowohl gegenüber dem Entlüftungsanschluss 4 als auch gegenüber dem Versorgungsanschluss 5 abgesperrt ist. Für eine erste Bestromungsrichtung des Schwenkankerventils 15 kann der Ausgangsanschluss 16 mit der Entlüftung 4 verbunden werden, während für eine entgegengesetzte Bestromung des Schwenkankerventils 15 der Ausgangsanschluss 16 mit dem Versorgungsanschluss 5 verbunden werden kann. Je nach Bestromung des Schwenkankerventils 15 kann somit an dem Ausgangsanschluss 16 ein Bremsdruck ausgesteuert werden, der korreliert mit der Bremsanforderung und beispielsweise proportional zu dieser ist. Möglich ist aber auch, dass mittels des Schwenkankerventils 15 eine ABS-Funktion mit einer Bremsdruckmodulation ausgeführt wird. In diesem Fall muss der Steuereinheit 13, insbesondere über das Bussystem und den Steueranschluss 3, ein Raddrehzahlsignal des Fahrzeugrades, an dem die ABS-Funktion gewährleistet werden muss, zugeführt werden.

Das Redundanzventil 10 ist für das dargestellte Ausführungsbeispiel als 3/2-Magnetventil 17 ausgebildet. In der in Fig. 1 wirksamen ersten Betriebsstellung, die in Folge der Wirkung der Feder nur bei Bestromung des Steueranschlusses 12 eingenommen wird, leitet das Redundanzventil 10 den von dem Bremsdruckventil 11 ausgesteuerten Bremsdruck durch an den Bremsaktuator-Anschluss 2. Ohne Bestromung des Steueranschlusses 12 wird das Redundanzventil umgeschaltet in eine zweite Betriebsstellung, in welcher das Bremsdruckventil 11 gegenüber dem Bremsaktuator-Anschluss 7 abgesperrt ist. Stattdessen verbindet in der zweiten Betriebsstellung das Redundanzventil 10 den Redundanzanschluss 6 mit dem Bremsaktuator-Anschluss 7.

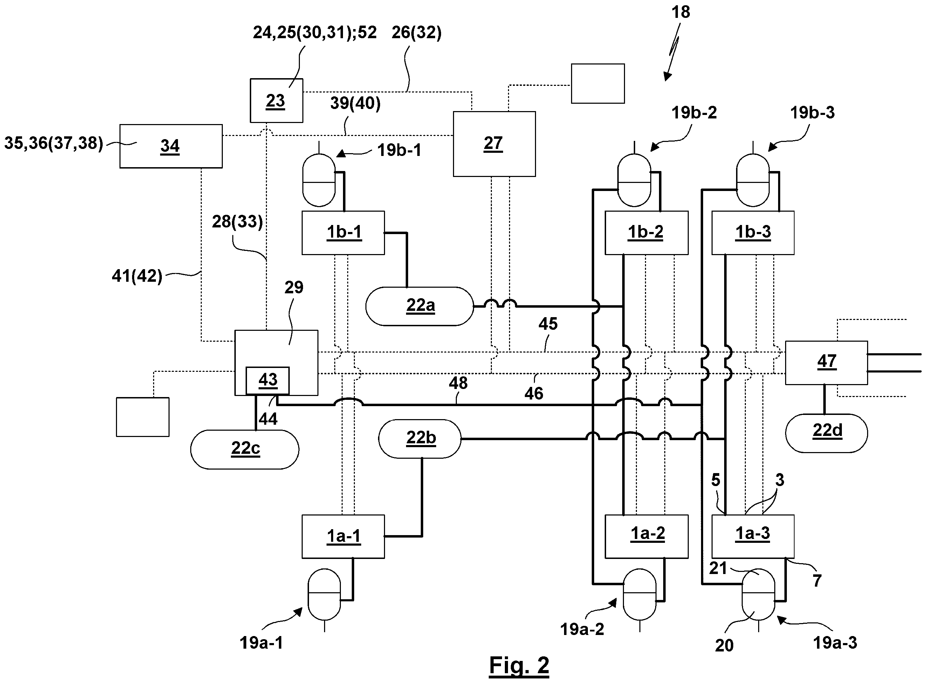

**Fig. 2** zeigt eine Bremsanlage 18. Die Bremsanlage 18 ist hier einem Nutzfahrzeug zugeordnet, welches drei Achsen, nämlich eine Vorderachse "-1", welche über gelenkte Fahrzeugräder verfügen kann, und zwei Hinterachsen "-2" und "-3" oder eine Tandem-Achse. Den Fahrzeugrädern sind jeweils Kombi-Bremszylinder 19 zugeordnet, wobei auch möglich ist, dass lediglich an den beiden hinteren Achsen Kombi-Bremszylinder 19 vorgesehen sind, während an den Fahrzeugrädern der vorderen Achse lediglich Betriebsbremszylinder angeordnet sind. (Zur Vereinfachung der Beschreibung wird teilweise davon ausgegangen, dass auch die Fahrzeugräder der Vorderachse Kombi-Bremszylindern 19 aufweisen, wobei dann das entsprechende gelten soll, wenn ihr nur Betriebsbremszylinder angeordnet sind.)

Wie beispielhaft anhand des Kombi-Bremszylinders 19a-3 in Fig. 2 dargestellt ist, verfügen die Kombi-Bremszylinder 19 jeweils über eine Betriebsbremskammer 20 und eine Federspeicherkammer 21. Eine gesteuerte oder geregelte pneumatische Beaufschlagung der Betriebsbremskammern 20 erfolgt über Radbremseinheiten 1.

Die Radbremseinheit 1 verfügt über eine redundante Druckluftversorgung mittels der Vorratsbehälter 22a, 22b. Mittels des Vorratsbehälters 22a werden die Radbremseinheiten 1b-1, 1b-2, 1a-2 mit Druckluft versorgt. Hingegen dient der Vorratsbehälter 22b der Druckluftversorgung der Radbremseinheit 1a-1, 1a-3 und 1b-3.

Die Bremsanlage 18 verfügt des Weiteren über eine Bremspedaleinheit 23. An der Bremspedaleinheit 23 kann der Fahrer über ein Bremspedal eine Fahrer-Bremsanforderung vorgeben. Die Bremspedaleinheit 23 verfügt über zwei Bremspedalsensoren 24, 25. Das Bremsanforderungssignal, welches von dem Bremspedalsensor 24 erfasst wird, wird mittels einer Bremsanforderungs-Signalleitung 26 übertragen an eine erste Steuereinheit 27, während das Bremsanforderungssignal, welches von dem Bremspedalsensor 25 erfasst wird, über eine Bremsanforderungs-Signalleitung 28 an eine zweite Steuereinheit 29 übertragen wird.

Möglich ist aber auch, dass weitere Bremspedalsensoren 30, 31 die Fahrer-Bremsanforderung in der Bremspedaleinheit 23 erfassen, wobei dann ein Bremsanforderungssignal des Bremspedalsensors 30 über eine weitere Bremsanforderungs-Signalleitung 32 an die erste Steuereinheit 27 übertragen werden kann und ein Bremsanforderungssignal des Bremspedalsensors 31 über eine weitere Bremsanforderungs-Signalleitung 33 an die zweite Steuereinheit 29 übertragen werden kann. Somit liegen die Bremsanforderungssignale jeweils redundant an den Steuereinheiten 27, 29 an.

Die Bremsanlage 18 verfügt auch über eine Parkbremsbetätigungseinheit 34. Die Parkbremsbetätigungseinheit 34 wird vorzugsweise von dem Fahrer per Hand betätigt. Es kann sich hierbei um einen Schalter mit zwei oder mehr Betriebsstellungen, einen Hebel u.ä. handeln. Vorzugsweise ist über die Parkbremsbetätigungseinheit 34 aber in einer Vielzahl von Stufen oder kontinuierlich eine Parkbremsanforderung vorgebbar. Diese Parkbremsanforderung wird erfasst durch Parkbrems-Betätigungssensoren 35, 36 oder für eine redundante Erfassung zusätzliche Parkbrems-Betätigungssensoren 37, 38. Ein Parkbrems-Betätigungssensor 35 oder zwei Parkbrems-Betätigungssensoren 35, 37 sind über eine Parkbremsanforderungs-Signalleitung 39 beziehungsweise zwei redundante Parkbremsanforderungs-Signalleitungen 39, 40 verbunden mit der ersten Steuereinheit 27. Entsprechend ist ein Parkbrems-Betätigungssensor 36 bzw. sind die Parkbrems-Betätigungssensoren 36, 38 über eine Parkbremsanforderungs-Signalleitung 41 bzw. die Parkbremsanforderungs-Signalleitungen 41, 42 mit der zweiten Steuereinheit 29 verbunden.

In die zweite Steuereinheit 29 ist eine elektropneumatische Parkbrems-Ventileinrichtung 43 integriert. An die Parkbrems-Ventileinrichtung 43 ist zur Druckluftversorgung ein Vorratsbehälter 22c angeschlossen. Die Parkbrems-Ventileinrichtung 43 verfügt des Weiteren über einen Parkbremsanschluss 44. Der Parkbremsanschluss 44 ist über eine Parkbremsleitung 48 mit den Federspeicherkammern 21 der Kombi-Bremszylinder 19a-2, 19a-3, 19b-2 und 19b-3 verbunden.

Die Bremsanlage 18 verfügt über redundante Bussysteme 45, 46. Die Bussysteme 45, 46 verbinden in redundanter Weise
a) die erste Steuereinheit 27 mit den Radbremseinheiten 1 zu deren Ansteuerung,
b) die erste Steuereinheit 27 mit der zweiten Steuereinheit 29 (und umgekehrt) und
c) die zweite Steuereinheit 29 mit den Radbremseinheiten 1 zur Ansteuerung derselben.

Hierbei sind die Bussysteme 45, 46 jeweils an die Steueranschlüsse 3 der Radbremseinheiten 1 angeschlossen.

Des Weiteren sind die Bussysteme 45, 46 mit einem Anhängersteuermodul 47 verbunden, welches der Erzeugung einer geeigneten Bremskraft an dem Anhänger dient, wobei vorzugsweise das Anhängersteuermodul 47 einen pneumatischen Bremssteuerdruck erzeugt, welcher über einen Kupplungskopf zwischen dem Zugfahrzeug und dem Anhänger übertragen wird. Zu erkennen ist in Fig. 2 auch ein Vorratsbehälter 22d, der der Druckluftversorgung des Anhängersteuermoduls 47 dient.

Für das in Fig. 2 dargestellte Ausführungsbeispiel werden die Redundanzanschlüsse 6 der Radbremseinheiten 1 nicht genutzt, so dass hier das Redundanzventil 10 entfallen kann oder bei vorhandenem Redundanzventil 10 dieses immer seine erste Betriebsstellung einnimmt, weshalb der Redundanzanschluss 6 mit einem Verschlusselement geschlossen sein kann oder auch nicht, beispielsweise durch Entfall der fräsenden Herstellung einer Ausnehmung für den Redundanzanschluss 6, in dem Gehäuse 2 vorgesehen sein kann.

Die Bremsanlage gemäß Fig. 2 ermöglicht insbesondere die folgenden Betriebsweisen:
- Gibt der Fahrer über das Bremspedal an der Bremspedaleinheit 23 eine Fahrer-Bremsanforderung vor, wird diese für einen Normalbetrieb redundant über die Sensoren 24, 30 erfasst und über die redundanten Bremsanforderungs-Signalleitungen 26, 32 an die erste Steuereinheit 27 übertragen.
   Stimmen diese bei der ersten Steuereinheit 27 eintreffenden Fahrer-Bremsanforderungen überein, ist gewährleistet, dass diese zutreffend sensiert und übertragen worden sind. Weichen diese hingegen voneinander ab, kann von der ersten Steuereinheit 27 eine Verifikation erfolgen, welche der übertragenen Fahrer-Bremsanforderungen zutreffend ist, indem über das Bussystem 45, 46 die Fahrer-Bremsanforderung von der zweiten Steuereinheit 29 empfangen wird, die von den Bremspedalsensoren 25, 31 zusätzlich erfasst und zusätzlich über die Bremsanforderungs-Signalleitungen 28, 33 an die zweite Steuereinheit 29 übertragen worden sind.
   Anhand der so verifizierten Fahrer-Bremsanforderung kann dann die Steuereinheit 27 über eines der Bussysteme 45, 46 die Radbremseinheiten 1 ansteuern, die dann einen geeigneten Bremsdruck entsprechend der Fahrer-Bremsanforderung mittels des Bremsdruckventils 11 an den Bremsaktuator-Anschluss 7 erzeugen, der dann zu der Betriebsbremskammer 20 der Kombi-Bremszylinder 19 gelangt und die gewünschte Bremskraft erzeugt. Über mittels des Bussystems 45, 46 übertragene weitere Signale kann die Radbremseinheit 1 dann u. U. auch eine dynamische Fahrstabilitätsregelung, eine ABS-Funktion u. ä. durchführen.
- Wird über die Parkbremsbetätigungseinheit 34 von dem Fahrer eine Parkbremsanforderung vorgegeben, kann diese mittels der Parkbrems-Betätigungssensoren 35, 37 redundant erfasst und über die Parkbremsanforderungs-Signalleitungen 41, 42 redundant an die zweite Steuereinheit 29 übertragen werden. Gelangen dieselben Parkbremsanforderungen zu der Steuereinheit 29, ist verifiziert, dass diese zutreffend erfasst und übertragen worden sind. Andernfalls kann die Steuereinheit 29 voneinander abweichende Parkbremsanforderungen durch Vergleich mit den Parkbremsanforderungen, die mittels der Parkbrems-Betätigungssensoren 36, 38 erfasst worden sind und über die redundanten Parkbremsanforderungs-Signalleitungen 39, 40 an die Steuereinheit 27 übertragen worden sind und über die Bussysteme 45, 46 an die Steuereinheit 29 übertragen werden können, ermitteln, welche Parkbremsanforderung auf der Parkbremsanforderungs-Signalleitung 41, 42 zutreffend war. Auf Grundlage der verifizierten Parkbremsanforderung kann dann die Steuereinheit 29 die Parkbrems-Ventileinrichtung 43 so ansteuern, dass diese einen mit der Parkbremsanforderung korrelierenden Parkbremsdruck an dem Parkbremsanschluss 44 erzeugt, der dann über die Parkbremsleitung 48 weitergeleitet wird zu den Federspeicherkammern 21 der Kombi-Bremszylinder 19 zur Herbeiführung der Parkbremskraft entsprechend der Parkbremsanforderung.
- Durch Koordinierung der Aussteuerung des Parkbremsdrucks durch die Steuereinheit 29 einerseits und der Aussteuerung eines Betriebsbremsdruckes durch die Steuereinheit 27 über die Bussysteme 45, 46 und/oder die Radbremseinheiten 1 andererseits kann vermieden werden, dass sich eine Betätigungskraft der Kombi-Bremszylinder 19, die durch eine Druckreduktion der Federspeicherkammer 21 hervorgerufen wird, und eine Betätigungskraft infolge der Druckbeaufschlagung der Betriebsbremskammer 21 addieren, womit eine zu hohe Beanspruchung der Bauelemente erfolgen würde. Während hierfür in herkömmlichen Bremsanlagen ein so genanntes Anti-Compound-Ventil erforderlich ist, kann diese Funktion verlagert werden in die Steuereinheiten 27, 29 und/oder die Steuereinheiten 13 der Radbremseinheiten 1, womit das Anti-Compound-Ventil entbehrlich ist und Kosten eingespart werden können.
- Möglich ist auch, dass eine Übertragung der Fahrer-Bremsanforderung und/oder der Parkbremsanforderung von den Steuereinheiten 27, 29 in redundanter Weise an die Radbremseinheiten 1 erfolgt, wobei in diesem Fall dann durch die Radbremseinheiten 1 ein Vergleich der unterschiedlichen Anforderungen und Verifikation derselben erfolgen kann.

- Möglich ist ein Fehler bei der Ansteuerung der Radbremseinheiten 1 durch die Steuereinheit 27. Ursache dieses Fehlers bspw. kann ein Defekt oder ein Verlust der elektrischen Leistungsversorgung der Steuereinheit 27, ein Versagen der Steuereinheit 27 selbst, eine fehlerhafte Übertragung der Fahrer-Bremsanforderung über die Bremsanforderungs-Signalleitungen 26, 32 und/oder ein Versagen der Bremspedalsensoren 24, 30 sein. Bei einem derartigen Fehler kann die Fahrer-Bremsanforderung mittels der Bremspedalsensoren 25, 31 erfasst werden, über die Bremsanforderungs-Signalleitungen 28, 33 an die zweite Steuereinheit 29 übertragen werden und die zweite Steuereinheit 29 kann über das Bussystem 45, 46 die Radbremseinheiten 1 ansteuern. Vorzugsweise ist hier über die Radbremseinheiten 1 die volle Funktionalität gewährleistet, womit auch eine Aussteuerung des Bremsdrucks für eine Fahrstabilitätsregelung, eine ABS-Funktion u.ä. erfolgen kann.
- Ist hingegen weder durch die Steuereinheit 27 noch durch die Steuereinheit 29 eine Ansteuerung der Radbremseinheiten 1 möglich, was beispielsweise der Fall sein kann, wenn die Versorgung der Radbremseinheit 1 mit Druckluft nicht mehr gewährleistet ist oder die Bussysteme 45, 46 nicht mehr funktionsfähig sind, kann die Steuereinheit 29 die Parkbrems-Ventileinrichtung 43 zur Aussteuerung eines Parkbremsdrucks ansteuern, der dann über die Parkbremsleitung 48 zu den Federspeicherkammern 21 der Kombi-Bremszylinder 19 geleitet wird. In diesem Fall wird die Fahrer-Bremsanforderung, die über die Bremspedaleinheit 23 vorgegeben ist, somit über die Federspeicherbremse gewährleistet, wobei hier eine abgestufte Bremsung je nach Steuerung oder Regelung der Parkbrems-Ventileinrichtung 43 für alle Fahrzeugräder gemeinsam erfolgt. Möglich ist dabei auch, dass hier eine Regelung des ausgesteuerten Parkbremsdruckes erfolgt unter Berücksichtigung eines etwaigen Schlupfes an den Fahrzeugrädern. Hierbei kann der Parkbremsdruck so abgestimmt sein, dass sich an sämtlichen Fahrzeugrädern kein Schlupf ergibt, womit der Parkbremsdruck an das Fahrzeugrad mit der niedrigsten übertragbaren Bremskraft angepasst werden muss (bezeichnet auch als "select low"). Möglich ist aber auch, dass der Parkbremsdruck angepasst ist an das Fahrzeugrad, an welchem die höchste Bremskraft erzeugt werden kann (bezeichnet auch als "select high"), um die maximal mögliche Abbremsung des Nutzfahrzeugs herbeizuführen.
- Ist eine Erzeugung, Übertragung oder Umsetzung einer Fahrer-Bremsanforderung von der Bremspedaleinheit 23 gänzlich unmöglich, kann der Fahrer an der Parkbremsbetätigungseinheit 34 eine Parkbremsanforderung vorgeben. Diese wird über die Parkbrems-Betätigungssensoren 36, 38 erfasst, über die Parkbremsanforderungs-Signalleitungen 41, 42 an die Steuereinheit 29 übertragen. In diesem Fall kann dann für eine erste mögliche Betriebsweise die Steuereinheit 29 über das Bussystem 45, 46 die Parkbremseinheiten 1 ansteuern zur Aussteuerung eines der Parkbremsanforderungen entsprechenden Bremsdrucks für die Betriebsbremskammern 20 der Kombi-Bremszylinder 19, womit auch eine ABS-Funktion und/oder eine dynamische Fahrstabilisierung erfolgen kann. Möglich ist aber auch, dass in einer möglichen zweiten Betriebsweise die Steuereinheit 29 einen Parkbremsdruck über die Parkbrems-Ventileinrichtung 43 aussteuert, mit dem dann über die Parkbremsleitung 48 die Federspeicherkammern 21 der Kombi-Bremszylinder 19 beaufschlagt werden. Möglich ist, dass die Art der Umsetzung der Parkbremsanforderung (die in diesem Fall tatsächlich keine Anforderung einer Parkbremsfunktion ist, sondern einer Abbremsung des Fahrzeugs dient) abhängig ist von der Geschwindigkeit des Fahrzeugs. So kann beispielsweise oberhalb eines Schwellwerts der Geschwindigkeit die Abbremsung über die Radbremseinheiten 1 gesteuert werden, während für kleinere Geschwindigkeiten die Abbremsung über die Parkbrems-Ventileinrichtung 43 erfolgen kann, oder umgekehrt.
- Möglich ist, dass über eine der Steuereinheiten 27, 29 auch ein Achsmotor für die Herbeiführung eines Generatorbetriebs und die Erzeugung eines Bremsmoments angesteuert wird, womit eine unterstützende Bremskraft erzeugt werden kann oder eine weitere Redundanz gewährleistet werden kann.
- Möglich ist auch, dass mittels der Steuerlogik der ersten oder zweiten Steuereinheit eine Ansteuerung eines Retarders zur Erzeugung eines unterstützenden oder redundanten Bremsmomentes erfolgt.
- Die Art der Regelung der Bremskraft an den einzelnen Fahrzeugrädern kann mit unterschiedlichen Regelungszielen erfolgen. So kann beispielsweise eine Vermeidung eines Rutschens durch richtige Bemessung des Bremsdruckes und/oder eine ABS-Modulation erfolgen. Möglich ist auch, dass ungeachtet eines etwaigen Schlupfes der Bremsdruck so vorgegeben wird, dass sich eine maximale Abbremsung des Fahrzeugs ergibt. Für einen besonderen Vorschlag der Erfindung ist in der Bremsanlage in einer der Steuereinheiten Steuerlogik vorhanden, mittels welcher eine Erzeugung eines Lenksignals oder eine Unterstützung einer Lenkung möglich ist. Dies erfolgt durch Ansteuerung der Radbremseinheiten 1 derart, dass diese unterschiedliche Bremskräfte auf unterschiedlichen Fahrzeugseiten erzeugen, welche zu einer Lenkbewegung oder der Unterstützung einer gelenkten Fahrt des Nutzfahrzeugs führen. Derartige unterschiedliche Bremskräfte auf unterschiedlichen Fahrzeugseiten können aber auch genutzt werden, um eine dynamische Fahrstabilisierung des Fahrzeugs vorzunehmen, indem ein stabilisierendes Giermoment erzeugt wird, welches das Nutzfahrzeug auf seiner bestimmungsgemäßen Bahn hält und bspw. eine Ausbrechen oder Schleudern verhindern kann.
- Möglich ist auch, dass Steuerlogik vorhanden ist, auf Grundlage welcher bei einem Fehler einer Übertragung einer Parkbremsanforderung von der Parkbremsbetätigungseinheit 34 über die Parkbremsanforderungs-Signalleitung 41, 42 zu der zweiten Steuereinheit 29 eine Übertragung der Parkbremsanforderung über die andere Parkbremsanforderungs-Signalleitung 39, 40 zu der ersten Steuereinheit 27 und von der ersten Steuereinheit 27 über das Bussystem 45, 46 zu der zweiten Steuereinheit 29 erfolgt.

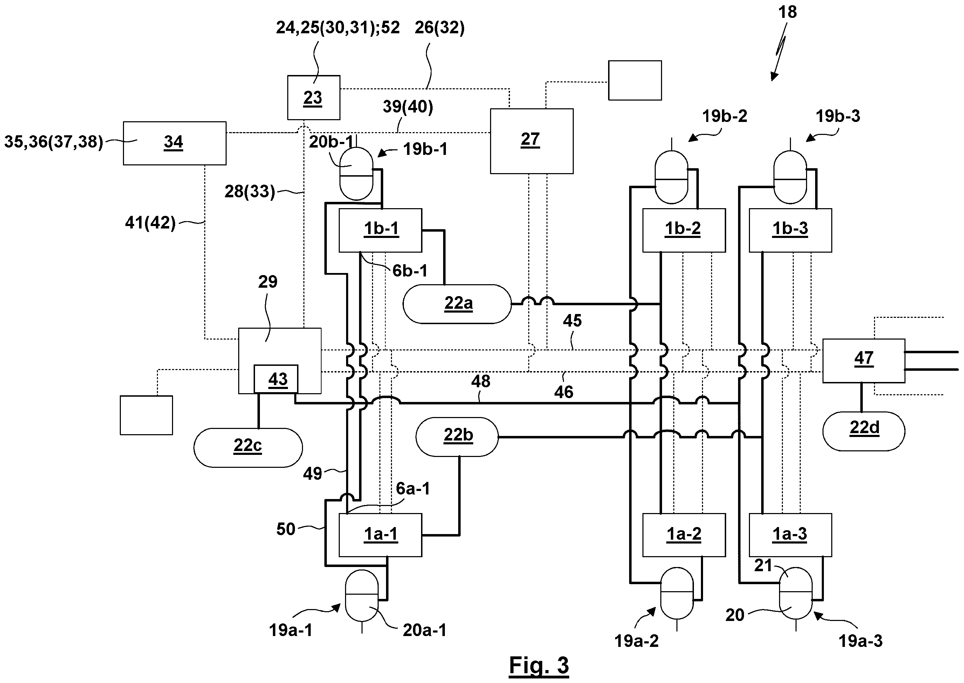

In **Fig. 3** ist eine Ausführungsform der Bremsanlage 18 dargestellt, welche grundsätzlich der Bremsanlage 18 gemäß Fig. 2 entspricht. Allerdings wird hier für die Fahrzeugräder der (gelenkten) Vorderachse eine redundante Ansteuerung ermöglicht. Zu diesem Zweck ist ein Redundanzanschluss 6a-1 der Radbremseinheit 1a-1 (abweichend zu der Darstellung in Fig. 3) über eine Verbindungsleitung 49 gekoppelt mit der Betriebsbremskammer 20 des Bremszylinders 19b-1 der anderen Fahrzeugseite. Entsprechend ist der Redundanzanschluss 6b-1 der Radbremseinheit 1b-1 über eine Verbindungsleitung 50 verbunden mit der Betriebsbremskammer 20 des Bremszylinders 19a-1. Für einen Normalbetrieb ohne ein Versagen der Ansteuerung der Bremszylinder 19a-1 und 19b-1 befinden sich die Radbremseinheiten 1a-1 und 1b-1 in der NormalBetriebsstellung, in welcher das Redundanzventil 10 in der ersten Betriebsstellung ist und eine separate Regelung der pneumatischen Bremsdrücke jeweils an den Bremszylinder 19a-1 und 19b-1 über die Bremsdruckventile 11 erfolgen kann. Kommt es hingegen zu einem Fehler (beispielsweise ein Verklemmen eines Bremsdruckventils 11a-1 oder ein Einbruch der Druckluftversorgung einer Radbremseinheit 1a-1), wird das Redundanzventil 10a-1 umgeschaltet in die zweite Betriebsstellung, was zur Folge hat, dass die Betriebsbremskammer 20a-1 über das Redundanzventil 10a-1 und den Redundanzanschluss 6a-1 über die genannte Verbindungsleitung 49 mit der Betriebsbremskammer 20b-1 des Bremszylinders 19b-1 verbunden wird. Somit steuert die Radbremseinheit 1b-1 einen pneumatischen Bremsdruck aus, mit welchem sowohl die Betriebsbremskammer 20b-1 als auch die Betriebsbremskammer 20a-1 der Bremszylinder 19a-1, 19b-1 beaufschlagt wird. Es ist somit eine zusätzliche Redundanzebene geschaffen. (Das Entsprechende gilt bei einem Fehler im Bereich des Bremspfades, in dem in der NormalBetriebsstellung die Radbremseinheit 1b-1 wirksam ist.)

Möglich ist, dass sowohl von der Steuereinheit 27 als auch von der Steuereinheit 29 eine Ansteuerung der Radbremseinheiten 1 über die Bussysteme 45, 46 erfolgt, womit dann die Verifikation der Fahrer-Bremsanforderung und die Auswahl derselben für die Aussteuerung des Bremsdrucks durch die Radbremseinheiten 1 erfolgen kann.

Möglich ist, dass zusätzlich zu der Steuereinheit 27 eine weitere Steuereinheit vorhanden ist, welche ebenfalls für die Ansteuerung der Radbremseinheiten 1 über das Bussystem 45, 46 dient. Die Steuereinheit 27 kann vorzugsweise auch ein "Vehicle Motion Module" sein, welches insgesamt für die Fahrstabilität verantwortlich ist.

In entsprechend redundanter Weise können die Steuereinheiten 27, 29 und/oder die Radbremseinheiten 1 auch an ein Abstandswarnsystem, ein Unfallvermeidungssystem u. ä. angeschlossen sein, wobei diese auch in eine der Steuereinheiten 27, 29 oder in die Radbremseinheit 1 integriert sein können.

Im Falle eines Auftretens eines der genannten Fehler erfolgt vorzugsweise durch die Steuereinheiten 27, 29 und/oder die Radbremseinheit 1 eine Erzeugung eines Warnsignals oder einer Warnanzeige für den Fahrer und/oder ein Fehlereintrag.

Möglich ist, dass auch mehrere zweite Steuereinheiten 29, die auch als Parkbremsmodule bezeichnet werden können, vorhanden sind zwecks Gewährleistung einer zusätzlichen Redundanz, wobei es auch möglich ist, dass jeweils eine derartige Steuereinheit oder ein Parkbremsmodul für eine Achse zuständig ist.

In der vorangegangenen Beschreibung wurde eine Fahrer-Bremsanforderung zur Betätigung der Betriebsbremsen vorgegeben über die Bremspedaleinheit 23. Ebenfalls möglich ist aber für sämtliche Ausführungsformen, dass die Bremsanforderung nicht durch den Fahrer vorgegeben wird, sondern diese automatisch durch ein autonomes Fahrzeug-Steuersystem 52 vorgegeben wird, wie dies in den Fig. 2 und 3 in den Klammern dargestellt ist.

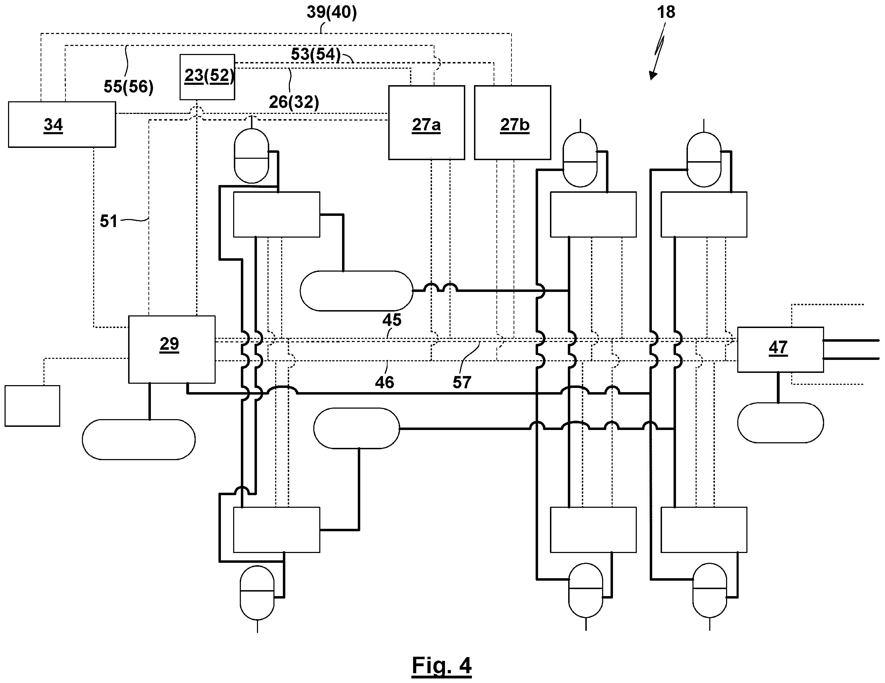

Die Bremsanlage 18 gemäß **Fig. 4** entspricht bis auf Weiteres der Bremsanlage gemäß Fig. 3, wobei die entsprechenden Funktionen gewährleistet sein können. Allerdings ist hier nicht lediglich eine erste Steuereinheit 27 vorhanden. Vielmehr sind hier zwei erste Steuereinheiten 27a, 27b vorhanden, über welche in einem Normal-Betriebszustand und insbesondere während des Fahrbetriebs in redundanter Weise eine Ansteuerung der Radbremseinheiten 1 über das Bussystem 45, 46 erfolgen kann. Somit kann bei einem Ausfall einer der ersten Steuereinheiten 27a, 27b die andere Steuereinheit 27b, 27a die Ansteuerung übernehmen. In diesem Fall ist die Bremspedaleinheit 23 oder das autonome Fahrzeug-Steuersystem 52 sowohl über Bremsanforderungs-Signalleitungen 26, 32 mit der Steuereinheit 27a als auch über Bremsanforderungs-Signalleitungen 53, 54 mit der Steuereinheit 27b verbunden. Hierbei können die genannten Bremsanforderungs-Signalleitungen zu den Steuereinheiten 27a, 27b einfach oder redundant ausgebildet sein, wozu dann die Bremspedaleinheit 23 einfache oder redundante Bremspedalsensoren aufweisen kann oder das autonome Fahrzeug-Steuersystem 52 einfache oder redundante Ausgänge aufweisen kann.

Das Entsprechende kann gemäß Fig. 4 für die Parkbremsbetätigungseinheit 34 gelten: Die Parkbremsbetätigungseinheit 34 kann einfach oder redundant über Parkbremsanforderungs-Signalleitungen 55, 56 mit der Steuereinheit 27a und über Parkbremsanforderungs-Signalleitungen 39, 40 mit der Steuereinheit 27b verbunden sein.

Optional kann, wie ebenfalls in Fig. 4 dargestellt ist, eine unmittelbare Verbindung der ersten Steuereinheit 27, in Fig. 4 der ersten Steuereinheit 27a, über eine Steuereinheiten-Verbindungsleitung 51 mit der zweiten Steuereinheit 29 erfolgen. Die Steuereinheiten-Verbindungsleitung 51 kann beispielsweise genutzt werden, wenn eine Ansteuerung der Radbremseinheiten 1 über die Steuereinheiten 27a, 27b und die Bussysteme 45, 46 nicht möglich ist und auch eine Übertragung einer Fahrer-Bremsanforderung oder einer Bremsanforderung durch das autonome Fahrzeug-Steuersystem 52 von den Steuereinheiten 27a, 27b über die Bussysteme 45, 46 an die Steuereinheit 29 nicht mehr möglich ist. In diesem Fall kann von einer der Steuereinheiten 27 eine Bremsanforderung über die Steuereinheiten-Verbindungsleitung 51 übertragen werden. Die Steuereinheit 29 kann dann entweder über das Bussystem die Radbremseinheiten 1 zur Aussteuerung eines Bremsdrucks für die Betriebsbremszylinder ansteuern oder die Steuereinheit 29 steuert die Parkbrems-Ventileinrichtung 43 an, um einen Bremsdruck zu erzeugen, der über die Parkbremsleitung 48 an die Federspeicherzylinder übertragen wird.

Als weitere Option kann gemäß Fig. 4 eine Anhängersteuermodul-Verbindungsleitung 57 vorhanden sein, über welche die Steuereinheit 29 mit dem Anhängersteuermodul 47 verbunden ist. Über diese Anhängersteuermodul-Verbindungsleitung 57 kann ein Steuersignal zur Ansteuerung des Anhängers von der Steuereinheit 29 an das Anhängersteuermodul 47 übermittelt werden auch dann, wenn die Bussysteme 45, 46 nicht mehr funktionsfähig sind.

Vorzugsweise werden der Steuereinheit 29, der Steuereinheit 27 und/oder den Steuereinheiten 13 der Radbremseinheiten 1 auch die Signale von Raddrehzahlsensoren zugeführt, so dass diese auch eine ABS-Funktion gewährleisten können/kann und/oder bei Ansteuerung der Federspeicherkammern über die Parkbremsleitung 48 eine Bemessung des Parkbremsdruckes nach "select high" oder "select low" vornehmen können/kann und/oder ebenfalls eine ABS-Modulation über die Federspeicherbremse ermöglichen können/kann.

Unter einem "Schwenkankerventil" im Sinne der vorliegenden Erfindung wird vorzugsweise ein Ventil verstanden, welches eine, beliebige mehrere oder sämtliche der folgenden Spezifikationen und Bedingungen erfüllt:
- Das Schwenkankerventil weist einen Schwenkanker auf, der den Ventilkörper bildet oder mit diesem gekoppelt ist, wobei sich der Ventilkörper relativ zu einem Ventilsitz zwischen einer geschlossenen und zumindest einer offenen Position bewegt. Der Schwenkanker kann mittels einer elektromagnetischen Betätigung in unterschiedliche Schwenkpositionen verschwenkt werden, die mit den unterschiedlichen Ventilstellungen (zumindest zwei Ventilstellungen) korrelieren. Alternativ oder zusätzlich ist es möglich, dass mittels der elektromagnetischen Beaufschlagung der Schwenkanker und/oder der Ventilkörper in zumindest einer der unterschiedlichen Ventilstellungen gehalten werden kann. Möglich ist auch, dass infolge der elektromagnetischen Beaufschlagung der Schwenkanker mit einem Biegemoment beaufschlagt wird. Der Schwenkanker oder eine Halteeinrichtung für denselben kann ein flexibles Element oder einen flexiblen Abschnitt aufweisen, der nachgiebig hinsichtlich einer Biegung mit dem Biegemoment, welches von dem Elektromagneten erzeugt worden ist, ist. Eine veränderte Schwenkposition oder Betriebsstellung des Schwenkankerventils entspricht einer veränderten Biegung des Schwenkankers oder der Halteeinrichtung, die durch die Betätigung mittels des Elektromagneten herbeigeführt worden ist. Hinsichtlich möglicher beispielhafter Ausführungsformen eines Schwenkankerventils dieses Typs mit einem flexiblen Biegeelement wird beispielsweise Bezug genommen auf die Druckschriften EP 2 756 215 B1, EP 2 049 373 B1, EP 2 567 131 B1 und EP 1 303 719 B1 und die Patentanmeldungen mit den Anmeldungs-Nummern GB 1 719 309.5, GB 1 904 957.6, GB 1 820 137.6, GB 1 806 527.6, GB 1 719 415.0 und GB 1 719 344.2. Die Offenbarung dieser Patentanmeldungen wird zum Gegenstand der vorliegenden Offenbarung gemacht, insbesondere hinsichtlich
- der Gestaltungsmöglichkeiten des Schwenkankerventils und/oder
- der Bereitstellung einer unterschiedlichen Zahl von stabilen und/oder instabilen Ventilstellungen und/oder
- der Gestaltung des flexiblen Elements, welches mit dem Biegemoment ausgelenkt wird, und/oder
- der Integration des flexiblen Elements in den Schwenkanker oder dessen Verbindung mit diesem und/oder
- der Verwendung und der Anordnung sowie Gestaltung von Permanentmagneten zur Gewährleistung mindestens einer stabilen Ventilstellung und/oder
- der Gestaltung zumindest eines Elektromagneten zur Erzeugung des Biegemoments zum Verschwenken des Schwenkankers und/oder
- der Steuerung (wo von im Rahmen der vorliegenden Erfindung auch eine Regelung umfasst ist) des Schwenkankerventils.

Allerdings ist auch möglich, dass das Schwenkankerventil einen Schwenkanker aufweist, dessen Verschwenkung nicht in einer Durchbiegung infolge eines Biegemoments besteht. Vielmehr ist bei einem derartigen Schwenkankerventil der Schwenkanker mittels eines Lagers oder Gelenks gelagert und um dieses verschwenkbar. Der Schwenkanker kann dann mittels der Elektromagneten in unterschiedliche Betriebsstellungen verschwenkt werden und/oder in diesen gehalten werden. Die unterschiedlichen Betriebsstellungen entsprechen dann unterschiedlichen Ventilstellungen des Schwenkankerventils. Hinsichtlich Ausführungsformen dieses Typs wird beispielhaft verwiesen auf die Veröffentlichungen WO 2016/062542 A1 und EP 3 222 897 A1, wobei hier der Schwenkanker dieses Typs auch als "Kippanker" bezeichnet ist. Die Offenbarung dieser Veröffentlichungen wird ebenfalls durch die vorliegende Bezugnahme zum Gegenstand der vorliegenden Patentanmeldung gemacht, insbesondere hinsichtlich der Gestaltung des Schwenkankerventils, der Möglichkeiten zur Bereitstellung unterschiedlicher Ventilstellungen und/oder zu der Steuerung und der elektromagnetischen Betätigung des Schwenkankerventils.
- Ein Schwenkankerventil kann auch als schnellwirkendes Bremsventil oder "fast acting brake valve" (abgekürzt "FABV") bezeichnet werden. Ein FABV ermöglicht eine schnelle Bremsbetätigung mit einer schnellen Veränderung der Betriebsstellungen und des Bremsdrucks. Möglich ist beispielsweise eine Veränderung einer Betriebsstellung innerhalb einer Zeitspanne von weniger als 25 ms, weniger als 20 ms, weniger als 10 ms, weniger als 7 ms, weniger als 5 ms, weniger als 3 ms, weniger als 2 ms, oder sogar weniger als 1 ms.
- Durch Einsatz eines Schwenkankerventils in einer Öffnungsposition kann eine große Flussrate und/oder ein großer Ventilquerschnitt oder Übertrittsquerschnitt bereitgesellt werden.
   Vorzugsweise entspricht ein Übertrittsquerschnitt oder Ventilquerschnitt des Schwenkankerventils in einer offenen Betriebsstellung desselben zumindest dem inneren Querschnitt einer Versorgungsleitung, die mit dem Versorgungsanschluss des Schwenkankerventils verbunden ist. Vorzugsweise beträgt der Übertrittsquerschnitt oder Ventilquerschnitt des Schwenkankerventils in der geöffneten Stellung zumindest 0,2 cm², wenn die Versorgungsleitung einen inneren Durchmesser von 5 mm hat.
   Vorzugsweise beträgt in der offenen Ventilstellung der Übertrittsquerschnitt oder Ventilquerschnitt zumindest 0,3 cm², zumindest 0,4 cm², zumindest 0,5 cm², zumindest 0,6 cm² oder sogar zumindest 0,8 cm².
- Infolge der Verschwenkung des Schwenkankers wird der Ventilkörper, der den Ventilsitz schließt, verschwenkt zwischen der geschlossenen Betriebsstellung und der geöffneten Betriebsstellung. Somit entspricht der Übertrittsquerschnitt in der offenen Betriebsstellung dem äußeren Umfang eines Zylinders, der in zwei nicht-parallelen Ebenen geschnitten ist, wobei diese Ebenen einen Winkel bilden, der dem Schwenkwinkel des Schwenkankers für die Verschwenkung zwischen der offenen Betriebsstellung und der geschlossenen Betriebsstellung entspricht. Vorzugsweise beträgt der Schwenkwinkel (und damit der Winkel zwischen den vorgenannten Ebenen) im Bereich von 1° bis 5° oder 2° bis 4°.
- Die (gemittelte) Bewegung des Ventilkörpers, der von dem Schwenkanker ausgebildet wird oder mit diesem gekoppelt ist, zwischen einer Ventilstellung und der benachbarten Ventilstellung liegt beispielsweise im Bereich von 0,5 bis 5 mm, insbesondere 1,0 bis 4 mm.
- Für die Steuerung (wovon auch eine Regelung umfasst ist) eines Schwenkankerventils der hier vorliegenden Art ergibt sich unter Umständen lediglich eine kleine zeitliche Verzögerung der Bewegung der Ventilelemente infolge der Massenträgheit, insbesondere eine Verzögerung oder eine Art Totzeit, die kleiner ist als 4 ms, kleiner ist als 2 ms oder sogar kleiner ist als 1 ms.
- Es ist möglich, dass das Schwenkankerventil mehr als eine stabile Betriebstellung aufweist. Das Schwenkankerventil kann beispielsweise bi-stabil oder multi-stabil sein. Dies kann beispielsweise ermöglicht werden dadurch, dass zwei oder mehr Betriebsstellungen des Schwenkankers oder einer mit dem Schwenkanker verbundenen Komponente durch einen Permanentmagneten gesichert wird (vgl. die Druckschriften EP 2 756 215 B1, EP 2 049 373 B1, EP 2 567 131 B1 und EP 1 303 719 B1 sowie die Patentanmeldungen mit den Anmelde-Nummern GB 1 719 309.5, GB 1 904 957.6, GB 1 820 137.6, GB 1 806 527.6, GB 1 719 415.0 und GB 1 719 344.2). Es ist allerdings auch möglich, dass bi-stabile Betriebsstellungen vorhanden sind durch Einsatz eines mechanischen Federelements, welches beispielsweise den Schwenkanker oder ein mit dem Schwenkanker gekoppeltes Ventilelement aus einer instabilen mittleren Gleichgewichtsposition in beide Richtungen in Richtung stabiler Betriebsstellungen beaufschlagt, wie dies beispielsweise in den Veröffentlichungen WO 2016/062542 A1 oder EP 3 222 897 A1 der Fall ist. Des Weiteren ist es möglich, dass eine stabile Stellung durch eine Biegesteifigkeit des flexiblen Elements oder Schwenkankers bereitgestellt wird.
- Das Schwenkankerventil kann ein elektronisch gesteuertes pneumatisches Ventil sein, ohne dass dieses über eine pneumatische Ansteuerung oder Vorsteuerung verfügt. Das elektronisch gesteuerte pneumatische Ventil kann eine einzige stabile Betriebsstellung, zwei oder mehr stabile Betriebsstellungen aufweisen, wenn dieses nicht elektrisch beaufschlagt ist.
   Für das Schwenkankerventil kann die pneumatische Bandbreite für eine Ansteuerung desselben vorrangig abhängig von der mechatronischen Gestaltung, der Größe des Aktuators und dem zu steuernden Volumen oder Fluss.
- Das Schwenkankerventil kann als 2/2-Wegeventil, 3/2-Wegeventil, 3/3-Wegeventil oder mit einer beliebigen anderen Anzahl von Anschlüssen und/oder Schaltzuständen ausgebildet sein. Möglich ist auch, dass ein Schwenkankerventil in unterschiedliche Betriebsstellungen mit unterschiedlicher Biegung des Schwenkankers oder eines Abschnitts oder eines Halteelements verschwenkt werden kann, wobei ein Wechsel einer Betriebsstellung dann auch möglich ist auf Grundlage der Energie, die in der Biegung des Schenkankers oder eines zugeordneten Abschnitts oder Halteelements gespeichert ist, so dass die Veränderung der Ventilstellung durch Beseitigung der Biegung (zumindest teilweise) erfolgt.

### BEZUGSZEICHENLISTE

- 1: Radbremseinheit
- 2: Gehäuse
- 3: Steueranschluss
- 4: Entlüftungsanschluss
- 5: Versorgungsanschluss
- 6: Redundanzanschluss
- 7: Bremsaktuator-Anschluss
- 8: Drucksensor
- 9: Drucksensor
- 10: Redundanzventil
- 11: Bremsdruckventil
- 12: Steueranschluss
- 13: Steuereinheit
- 14: Steueranschluss
- 15: Schwenkankerventil
- 16: Ausgangsanschluss
- 17: 3/2-Magnetventil
- 18: Bremsanlage
- 19: Kombi-Bremszylinder
- 20: Betriebsbremskammer
- 21: Federspeicherkammer
- 22: Vorratsbehälter
- 23: Bremspedaleinheit
- 24: Bremspedalsensor
- 25: Bremspedalsensor
- 26: Bremsanforderungs-Signalleitung
- 27: erste Steuereinheit
- 28: Bremsanforderungs-Signalleitung
- 29: zweite Steuereinheit
- 30: Bremspedalsensor
- 31: Bremspedalsensor
- 32: Bremsanforderungs-Signalleitung
- 33: Bremsanforderungs-Signalleitung
- 34: Parkbremsbetätigungseinheit
- 35: Parkbrems-Betätigungssensor
- 36: Parkbrems-Betätigungssensor
- 37: Parkbrems-Betätigungssensor
- 38: Parkbrems-Betätigungssensor
- 39: Parkbremsanforderungs-Signalleitung
- 40: Parkbremsanforderungs-Signalleitung
- 41: Parkbremsanforderungs-Signalleitung
- 42: Parkbremsanforderungs-Signalleitung
- 43: Parkbrems-Ventileinrichtung
- 44: Parkbremsanschluss
- 45: Bussystem
- 46: Bussystem
- 47: Anhängersteuermodul
- 48: Parkbremsleitung
- 49: Verbindungsleitung
- 50: Verbindungsleitung
- 51: Steuereinheiten-Verbindungsleitung
- 52: autonome Fahrzeug-Steuersystem
- 53: Bremsanforderungs-Signalleitung
- 54: Bremsanforderungs-Signalleitung
- 55: Parkbremsanforderungs-Signalleitung
- 56: Parkbremsanforderungs-Signalleitung
- 57: Anhängersteuermodul-Verbindungsleitung

## Patentansprüche

1. Bremsanlage (18) eines Nutzfahrzeugs mit
a) einer ersten Steuereinheit (27), die über ein Bussystem (45, 46) mit einer elektropneumatischen Radbremseinheit (1) verbunden ist, an die eine Betriebsbremskammer (20) eines Kombi-Bremszylinder (19) angeschlossen ist, und die über das Bussystem (45, 46) die Radbremseinheit (1) elektrisch ansteuert, um entsprechend einer Bremsanforderung einen pneumatischen Bremsdruck für die Betriebsbremskammer (20) des Kombi-Bremszylinders (19) auszusteuern,
b) einer zweiten Steuereinheit (29), die über das Bussystem (45, 46) mit der elektropneumatischen Radbremseinheit (1) verbunden ist und die über das Bussystem (45, 46) die Radbremseinheit (1) elektrisch ansteuert, um entsprechend einer Bremsanforderung einen pneumatischen Bremsdruck für die Betriebsbremskammer (20) des Kombi-Bremszylinders (19) auszusteuern, wobei die zweite Steuereinheit (29) auch eine elektropneumatische Parkbrems-Ventileinrichtung (43) elektrisch ansteuert zur Erzeugung eines Parkbremsdruckes entsprechend einer Bremsanforderung, wobei die Parkbrems-Ventileinrichtung (43) zur Übertragung des Parkbremsdruckes über eine pneumatische Parkbremsleitung (48) mit einer Federspeicherkammer (21) des Kombi-Bremszylinders (19) verbunden ist,
c) wobei
ca) eine Betriebsbremseinheit zur Übertragung einer Bremsanforderung über Bremsanforderungs-Signalleitungen (26, 28, 32, 33) sowohl mit der ersten Steuereinheit (27) als auch mit der zweiten Steuereinheit (29) verbunden ist und/oder
cb) eine Parkbremsbetätigungseinheit (34) zur Übertragung einer Parkbremsanforderung über Parkbremsanforderungs-Signalleitungen (39, 40, 41, 42) sowohl mit der ersten Steuereinheit (27) als auch mit der zweiten Steuereinheit (29) verbunden ist.

2. Bremsanlage (18) eines Nutzfahrzeugs nach Anspruch 1, **dadurch gekennzeichnet, dass** die Betriebsbremseinheit ein autonomes Fahrzeug-Steuersystem (52) ist.

3. Bremsanlage (18) eines Nutzfahrzeugs nach Anspruch 1, **dadurch gekennzeichnet, dass** die Betriebsbremseinheit eine Bremspedaleinheit (23) ist, an der der Fahrer die als Fahrer-Bremsanforderung ausgebildete Bremsanforderung über ein Bremspedal vorgeben kann.

4. Bremsanlage (18) eines Nutzfahrzeugs nach einem der vorhergehenden Ansprüche, **dadurch gekennzeichnet, dass**
a) die Bremspedaleinheit (23)
aa) zwei Bremspedalsensoren (24, 30) aufweist, die jeweils über Bremsanforderungs-Signalleitungen (26, 32) mit der ersten Steuereinheit (27) verbunden sind, und/oder
ab) zwei Bremspedalsensoren (25, 31) aufweist, die jeweils über Bremsanforderungs-Signalleitungen (28, 33) mit der zweiten Steuereinheit (29) verbunden sind, und/oder
b) die Parkbremsbetätigungseinheit (34)
ba) zwei Parkbrems-Betätigungssensoren (35, 37) aufweist, die jeweils über Parkbremsanforderungs-Signalleitungen (39, 40) mit der ersten Steuereinheit (27) verbunden sind, und/oder
ba) zwei Parkbrems-Betätigungssensoren (36, 38) aufweist, die jeweils über Parkbremsanforderungs-Signalleitungen (41, 42) mit der zweiten Steuereinheit (29) verbunden sind.

5. Bremsanlage (18) nach einem der vorhergehenden Ansprüche, **dadurch gekennzeichnet, dass** Steuerlogik vorhanden ist, welche die Bremsanforderungen, die über die Bremsanforderungs-Signalleitungen an die erste Steuereinheit und an die zweite Steuereinheit übertragen werden, für eine Fehlerüberwachung miteinander vergleicht.

6. Bremsanlage (18) nach einem der vorhergehenden Ansprüche, **dadurch gekennzeichnet, dass** die Parkbremsbetätigungseinheit (34) ein Parkbremsbetätigungsmittel aufweist, mittels dessen eine abgestufte oder kontinuierlich veränderbare Parkbremsanforderung erzeugt werden kann.

7. Bremsanlage (18) nach einem der vorhergehenden Ansprüche, **dadurch gekennzeichnet, dass** in die erste Steuereinheit (27), die zweite Steuereinheit (29) oder die Radbremseinheit (1) eines elektrische Überlastschutzfunktion integriert ist, welche eine Überlast des Kombi-Bremszylinders (19) durch eine Addition
a) einer Parkbremskraft infolge einer Entlüftung der Federspeicherkammer (21) des Kombi-Bremszylinders (19) durch die von der zweiten Steuereinheit (29) angesteuerte elektropneumatische Parkbrems-Ventileinrichtung (43) und
b) einer Betriebsbremskraft infolge einer Belüftung der Betriebsbremskammer (20) des Kombi-Bremszylinders durch die Radbremseinheit (1)
vermeidet.

8. Bremsanlage (18) nach einem der vorhergehenden Ansprüche, **dadurch gekennzeichnet, dass** Steuerlogik vorhanden ist, mit welcher bei einem Versagen der Ansteuerung der Radbremseinheit (1) entsprechend der Bremsanforderung die zweite Steuereinheit (29) einen mit der Bremsanforderung korrelierenden Parkbremsdruck aussteuert, der über die pneumatische Parkbremsleitung (48) an die Federspeicherkammer (21) des Kombi-Bremszylinders (19) übertragen wird.

9. Bremsanlage (18) nach einem der vorhergehenden Ansprüche, **dadurch gekennzeichnet, dass** Steuerlogik vorhanden ist, über welche bei einem Fehler oder Ausfall einer Erzeugung oder einer Übertragung einer über die Bremspedaleinheit (23) oder über das autonome Fahrzeug-Steuersystem (52) vorgegebenen Bremsanforderung eine Parkbremsanforderung, die von dem Fahrer an der Parkbremsbetätigungseinheit (34) vorgebbar ist, an die zweite Steuereinheit (29) übertragbar ist, wobei die zweite Steuereinheit (29) über das Bussystem (45, 46) die Radbremseinheit (1) zur Aussteuerung eines Bremsdrucks in der Betriebsbremskammer (20) des Kombi-Bremszylinders (19) steuert, wobei der ausgesteuerte Bremsdruck mit der Parkbremsanforderung korreliert.

10. Bremsanlage (18) nach einem der vorhergehenden Ansprüche, **dadurch gekennzeichnet, dass** über Steuerlogik der ersten Steuereinheit (27) und/oder der zweiten Steuereinheit (29)
a) auch eine Ansteuerung eines Achsmotors zur Erzeugung eines Bremsmoments möglich ist und/oder
b) auch eine Ansteuerung eines Retarders zur Erzeugung eines Bremsmoments möglich ist.

11. Bremsanlage (18) nach einem der vorhergehenden Ansprüche, **dadurch gekennzeichnet, dass** Steuerlogik vorhanden ist, über welche über die erste Steuereinheit (27) und/oder die zweite Steuereinheit (29) auch eine Erzeugung eines Lenksignals durch Ansteuerung von Radbremseinheiten (1) zur Erzeugung unterschiedlicher Bremskräfte auf unterschiedlichen Fahrzeugseiten möglich ist.

12. Bremsanlage (18) nach einem der vorhergehenden Ansprüche, **dadurch gekennzeichnet, dass** Steuerlogik vorhanden ist, die bei einem Fehler einer Übertragung einer Parkbremsanforderung von einer Parkbremsbetätigungseinheit (34) über die Parkbremsanforderungs-Signalleitung (41, 42) zu der zweiten Steuereinheit (29) eine Übertragung der Parkbremsanforderung über die andere Parkbremsanforderungs-Signalleitung (39, 40) zu der ersten Steuereinheit (27) und von der ersten Steuereinheit (27) über das Bussystem (45, 46) zu der zweiten Steuereinheit (29) erfolgt.

13. Bremsanlage (18) nach einem der vorhergehenden Ansprüche, **dadurch gekennzeichnet, dass** die Parkbremsbetätigungseinheit (34) und/oder die Bremspedaleinheit (23) mit zwei ersten Steuereinheit (27a, 27b) verbunden sind/ist.

14. Bremsanlage (18) nach einem der vorhergehenden Ansprüche, **dadurch gekennzeichnet, dass** die erste Steuereinheit (27) und die zweite Steuereinheit (29) über eine Steuereinheiten-Verbindungsleitung (51) miteinander verbunden sind.

## Claims

1. Brake system (18) of a commercial vehicle comprising
a) a first control unit (27) which is connected by a bus system (45, 46) to an electro-pneumatic wheel brake unit (1) which is connected to a service brake chamber (20) of a combination brake cylinder (19), and which electrically controls the wheel brake unit (1) via the bus system (45, 46) in order to control a pneumatic brake pressure for the service brake chamber (20) of the combination brake cylinder (19) to correspond to a brake demand,
b) a second control unit (29) which is connected via the bus system (45, 46) to the electro-pneumatic wheel brake unit (1) and which electrically controls the wheel brake unit (1) via the bus system (45, 46) in order to control a pneumatic brake pressure for the service brake chamber (20) of the combination brake cylinder (19) to correspond to a brake demand, the second control unit (29) also electrically controlling an electro-pneumatic parking brake valve device (43) for generating a parking brake pressure to correspond to a brake demand, wherein the parking brake valve device (43) is connected via a pneumatic parking brake line (48) to a spring brake chamber (21) of the combination brake cylinder (19) for transmitting the parking brake pressure,
c) wherein
ca) a service brake unit is connected via brake demand signaling lines (26, 28, 32, 33) both to the first control unit (27) as well as to the second control unit (29) for transmitting a brake demand and/or
cb) a parking brake actuation unit (34) is connected by parking brake demand signaling lines (39, 40, 41, 42) both to the first control unit (27) as well as to the second control unit (29) for transmitting a parking brake demand.

2. Brake system (18) of a commercial vehicle of claim 1, **characterized in that** the service brake unit is an autonomous vehicle control system (52).

3. Brake system (18) of a commercial vehicle of claim 1, **characterized in that** the service brake unit is a brake pedal unit (23) which allows the driver to set the brake demand embodied as a driver brake demand via a brake pedal.

4. Brake system (18) of a commercial vehicle of one of the preceding claims, **characterized in that**
a) the brake pedal unit (23)
aa) comprises two brake pedal sensors (24, 30) which are each connected via brake demand signalling lines (26, 32) to the first control unit (27) and/or
ab) comprises two brake pedal sensors (25, 31) which are each connected by brake demand signalling lines (28, 33) to the second control unit (29) and/or
b) the parking brake actuation unit (34)
ba) comprises two parking brake actuation sensors (35, 37) which are each connected via parking brake demand signalling lines (39, 40) to the first control unit (27) and/or
ba) comprises two parking brake actuation sensors (36, 38) which are each connected via parking brake demand signalling lines (41, 42) to the second control unit (29).

5. Brake system (18) of one of the preceding claims, **characterized in that** control logic is provided which compares brake demands which are transmitted via the brake demand signalling lines to the first control unit and to the second control unit to each other for a failure monitoring.

6. Brake system (18) of one of the preceding claims, **characterized in that** the parking brake actuation unit (34) comprises a parking brake actuation means by which it is possible to generate a parking brake demand which can be adjusted in steps or continuously.

7. Brake system (18) of one of the preceding claims, **characterized in that** an electric overload protection function is integrated into the first control unit (27), the second control unit (29) or the wheel brake unit (1), the electric overload protection function avoiding an overload of the combination brake cylinder (19) due to in addition
a) of a parking brake force due to a de-aeration of the spring brake chamber (21) of the combination brake cylinder (18) by the electro-pneumatic parking brake valve device (43) controlled by the second control unit (29) and
b) a service brake force due to an aeration of the service brake chamber (20) of the combination brake cylinder by the wheel brake unit (1).

8. Brake system (18) of one of the preceding claims, **characterized in that** control logic is provided by which the second control unit (29) controls a parking brake pressure correlating with the brake demand in the case of a failure of the control of the wheel brake unit (1) to correspond to the brake demand, the parking brake pressure being transmitted via the pneumatic parking brake line (48) to the spring brake chamber (21) of the combination brake cylinder (19).

9. Brake system (18) of one of the preceding claims, **characterized in that** control logic is provided by which in the case of a failure or a brake down of a generation or a transmission of a brake demand set via the brake pedal unit (23) or by the autonomous vehicle control system (52) it is possible to transmit a parking brake demand which can be set by the driver at the parking brake actuation unit (34) to the second control unit (29), the second control unit (29) controlling the wheel brake unit (1) via the bus system (45, 46) for controlling a brake pressure in the service brake chamber (20) of the combination brake cylinder (19), the controlled brake pressure correlating with the parking brake demand.

10. Brake system (18) of one of the preceding claims, **characterized in that** the control logic of the first control unit (27) and/or the second control unit (29) allows
a) also a control of an axle motor for generating a brake torque and/or
b) also a control of a retarder for generating a brake torque.

11. Brake system (18) of one of the preceding claims, **characterized in that** control logic is provided by which it is possible that the first control unit (27) and/or the second control unit (29) are able also to generate a steering signal for controlling the wheel brake units (1) for generating different brake forces on different vehicle sides.

12. Brake system (18) of one of the preceding claims, **characterized in that** control logic is provided which in the case of a failure of a transmission of a parking brake demand from a parking brake actuation unit (34) via the parking brake demand signalling line (41, 42) to the second control unit (29) allows a transmission of the parking brake demand via the other parking brake demand signalling line (39, 40) to the first control unit (27) and from the first control unit (27) via the bus system (45, 46) to the second control unit (29).

13. Brake system (18) of one of the preceding claims, **characterized in that** the parking brake actuation unit (34) and/or the brake pedal unit (23) are/is connected to two first control units (27a, 27b).

14. Brake system (18) of one of the preceding claims, **characterized in that** the first control unit (27) and the second control unit (29) are connected to each other by a control unit connecting line (50).

## Revendications

1. Installation de freinage (18) d'un véhicule utilitaire avec
a) une première unité de commande (27), qui est reliée, par l'intermédiaire d'un système de bus (45, 46), avec une unité de freinage de roue électropneumatique (1), à laquelle est raccordée une chambre de freinage de service (20) d'un vérin de freinage combiné (19) et qui contrôle électriquement, par l'intermédiaire du système de bus (45, 46), l'unité de freinage de roue (1), afin de contrôler, en fonction d'une demande de freinage, une pression de freinage pneumatique pour la chambre de freinage de service (20) du vérin de freinage combiné (19),
b) une deuxième unité de commande (29), qui est reliée, par l'intermédiaire d'un système de bus (45, 46), avec l'unité de freinage de roue électropneumatique (1), et qui contrôle électriquement, par l'intermédiaire du système de bus (45, 46), l'unité de freinage de roue (1) afin de contrôler, en fonction d'une demande de freinage, une pression de freinage pneumatique pour la chambre de freinage de service (20) du vérin de freinage combiné (19), dans laquelle la deuxième unité de commande (29) contrôle électriquement également un dispositif de soupape de freinage de stationnement (43) afin de générer une pression de freinage de stationnement en fonction d'une demande de freinage, dans laquelle le dispositif de soupape de freinage de stationnement (43) pour la transmission de la pression de freinage de stationnement par l'intermédiaire d'une conduite de freinage de stationnement pneumatique (48) avec une chambre d'accumulation à ressort (21) du vérin de freinage combiné (19),
c) dans laquelle
ca) une unité de freinage de service pour la transmission d'une demande de freinage est reliée, par l'intermédiaire de conduites de signalisation de demande de freinage (26, 28, 32, 33), aussi bien avec la première unité de commande (27) qu'avec la deuxième unité de commande (29) et/ou
cb) une unité d'actionnement de frein de stationnement (34) est reliée, pour la transmission d'une demande de freinage de stationnement par l'intermédiaire de conduites de signalisation de demande de freinage de stationnement (39, 40, 41, 42), aussi bien avec la première unité de commande (27) qu'avec la deuxième unité de commande (29).

2. Installation de freinage (18) d'un véhicule utilitaire selon la revendication 1, **caractérisée en ce que** l'unité de freinage de service est un système de commande de véhicule autonome (52).

3. Installation de freinage (18) d'un véhicule utilitaire selon la revendication 1, **caractérisée en ce que** l'unité de freinage de service est une unité de pédale de freinage (23) au niveau de laquelle le conducteur peut prédéterminer la demande de freinage, conçue comme une demande du freinage du conducteur, par l'intermédiaire d'une pédale de freinage.

4. Installation de freinage (18) d'un véhicule utilitaire selon l'une des revendications précédentes, **caractérisée en ce que**
a) l'unité de pédale de freinage (23)
aa) comprend deux capteurs de pédale de freinage (24, 30), qui sont reliés chacun, par l'intermédiaire de conduites de signalisation de demande de freinage (26, 32) avec la première unité de commande (27) et/ou
ab) comprend deux capteurs de pédale de freinage (25, 61), qui sont reliés chacun, par l'intermédiaire de conduites de signalisation de demande de freinage (28, 33) avec la deuxième unité de commande (29) et/ou
b) l'unité d'actionnement de freinage de stationnement (34)
ba) comprend deux capteurs d'actionnement de freinage de stationnement (35, 37), qui sont reliés chacun, par l'intermédiaire de conduites de signalisation de demande de freinage de stationnement (39, 40) avec la première unité de commande (27) et/ou
bb) comprend deux capteurs d'actionnement de freinage de stationnement (36, 38), qui sont reliés chacun, par l'intermédiaire de conduites de signalisation de demande de freinage de stationnement (41, 42) avec la deuxième unité de commande (29).
bc)

5. Installation de freinage (18) d'un véhicule utilitaire selon l'une des revendications précédentes, **caractérisée en ce qu'**une logique de commande est prévue, qui compare entre elles les demandes de freinage transmise par l'intermédiaire des conduites de signalisation de demande de freinage à la première unité de commande et à la deuxième unité de commande, pour une surveillance d'erreurs.

6. Installation de freinage (18) d'un véhicule utilitaire selon l'une des revendications précédentes, **caractérisée en ce que** l'unité d'actionnement de freinage de stationnement (34) comprend un moyen d'actionnement de freinage de stationnement au moyen duquel une demande de freinage de stationnement variable de manière échelonnée ou continue peut être générée.

7. Installation de freinage (18) d'un véhicule utilitaire selon l'une des revendications précédentes, **caractérisée en ce que**, dans la première unité de commande (27), la deuxième unité de commande (29) ou l'unité de freinage de roue (1), est intégrée une fonction de protection contre les surcharges électriques, qui évite une surcharge du vérin de freinage combiné (19) par une addition
a) d'une force de freinage de stationnement suite à une ventilation de la chambre d'accumulation à ressort (21) du vérin de freinage combiné (19) par le dispositif à soupape de freinage de stationnement électropneumatique (43) contrôlée par la deuxième unité de commande (29) et
b) une force de freinage de service suite à une ventilation de la chambre de freinage de fonctionnement (20) du vérin de freinage combiné par l'unité de freinage de roue (1).

8. Installation de freinage (18) d'un véhicule utilitaire selon l'une des revendications précédentes, **caractérisée en ce qu'**une logique de commande est prévue, avec laquelle, lors d'une défaillance de la commande de l'unité de freinage de roue (1), en fonction de la demande de freinage, la deuxième unité de commande (29) contrôle une pression de freinage de stationnement corrélée avec la demande de freinage, qui est transmise par l'intermédiaire de la conduite de freinage de stationnement pneumatique (48) à la chambre d'accumulation à ressort (21) du vérin de freinage combiné (19).

9. Installation de freinage (18) d'un véhicule utilitaire selon l'une des revendications précédentes, **caractérisée en ce qu'**une logique de commande est prévue, par l'intermédiaire de laquelle, lors d'une erreur ou d'un manque de génération ou de transmission d'une demande de freinage, prédéterminée par l'intermédiaire de l'unité de pédale de freinage (23) ou par l'intermédiaire du système de commande de véhicule autonome (52), une demande de freinage de stationnement, qui peut être prédéterminée par le conducteur à l'unité d'actionnement de freinage de stationnement (34), peut être transmise à la deuxième unité de commande (29), dans laquelle la deuxième unité de commande (29) contrôle, par l'intermédiaire du système de bus (45, 46), l'unité de freinage de roue (1) pour le contrôle d'une pression de freinage dans la chambre de freinage de service (20) du vérin de freinage combiné (19), dans laquelle la pression de freinage contrôlée est corrélée avec la demande de freinage de stationnement.

10. Installation de freinage (18) d'un véhicule utilitaire selon l'une des revendications précédentes, **caractérisée en ce que**, par l'intermédiaire de la logique de commande de la première unité de commande (27) et/ou de la deuxième unité de commande (29)
a) il est possible de contrôler un moteur axial afin de générer un couple de freinage et/ou
b) il est possible de contrôler un retardateur afin de générer un couple de freinage.

11. Installation de freinage (18) d'un véhicule utilitaire selon l'une des revendications précédentes, **caractérisée en ce qu'**une logique de commande est prévue, par l'intermédiaire de laquelle, par l'intermédiaire de la première unité de commande (27) et/ou de la deuxième unité de commande (29), il est également possible de générer un signal de direction grâce au contrôle d'unités de freinage de roue (1) afin de générer différentes forces de freinage sur différents côtés du véhicule.

12. Installation de freinage (18) d'un véhicule utilitaire selon l'une des revendications précédentes, **caractérisée en ce qu'**une logique de commande est prévue, qui, lors d'une erreur de transmission d'une demande de freinage par une unité d'actionnement de freinage de stationnement (34) par l'intermédiaire de la conduite de signalisation de demande de freinage de stationnement (41, 42) vers la deuxième unité de commande (29), une transmission de la demande de freinage de stationnement a lieu par l'intermédiaire de l'autre conduite de signalisation de demande de freinage de stationnement (39, 40) vers la première unité de commande (27) et de la première unité de commande (27) par l'intermédiaire du système de bus (45, 46) vers la deuxième unité de commande (29).

13. Installation de freinage (18) d'un véhicule utilitaire selon l'une des revendications précédentes, **caractérisée en ce que** l'unité d'actionnement de freinage de stationnement (34) et/ou l'unité de pédale de freinage (23) sont reliées avec deux premières unités de commande (27a, 27b).

14. Installation de freinage (18) d'un véhicule utilitaire selon l'une des revendications précédentes, **caractérisée en ce que** la première unité de commande (27) et la deuxième unité de commande (29) sont reliées entre elles par l'intermédiaire d'une conduite de liaison des unités de commande (51).
